# EUROPÄISCHE PATENTANMELDUNG

(11) **EP 1 372 079 A2**
(43) Veröffentlichungstag der Anmeldung: **17.12.2003**
(21) Anmeldenummer: 03007249.0
(22) Anmeldetag: 31.03.2003
(51) Int. Cl.: G06F 13/10

(54) **Verteiltes objektorientiertes Gerätenetzwerksystem**

(30) Priorität: 12.06.2002 DE 10226026
(71) Anmelder: ROBERT BOSCH GMBH, 70442 Stuttgart (DE)
(72) Erfinder: Mann Pelz, Rodolfo, 30175 Hannover (DE); Praefcke, Werner, 31141 Hildesheim (DE)

(57) **Zusammenfassung**

Bei einem verteilten objektorientierten Gerätenetzwerksystem mit Softwareanwendungen (1), an das Gerätenetzwerk (3) angeschlossenen prozessorgesteuerten elektronischen Geräten (2) und mit Steuerungsmitteln für eine Vielzahl von Klassen von Softwareanwendungen (1) und Geräten (2) bilden die Steuerungsmittel eine Abstraktionsschicht zur Anpassung von Kommunikationsplattformen der Softwareanwendungen (1) und Geräten (2) an eine systemunabhängige Kommunikationsplattform, die unabhängig von den Softwareanwendungen (1), Geräten (2) und dem Gerätenetzwerk (3) ist.

## Beschreibung

Die Erfindung betrifft ein verteiltes objektorientiertes Gerätenetzwerksystem mit Softwareanwendungen, an das Netzwerk angeschlossenen prozessorgesteuerten elektronischen Geräten, und mit Steuerungsmitteln für eine Vielzahl von Klassen von Softwareanwendungen und Geräten.

Verteilte objektorientierte Gerätenetzwerksysteme sind hinreichend bekannt und werden für vielfältige Anwendungen, wie z. B. in Computersystemen, Kraftfahrzeugdatenbussystemen, Fahrerinformationssystemen in Kraftfahrzeugen etc. eingesetzt. Die Softwareanwendungen sind hierbei auf das Betriebssystem der zugrundeliegenden Rechnereinheit beschränkt und werden relativ aufwändig statisch installiert. Eine Kommunikation über das Gerätenetzwerk erfolgt lediglich zum Zwecke des Datenaustauschs (Content). Eine dynamische Erweiterbarkeit wird nicht unterstützt.

Aufgabe der Erfindung war es daher, ein verbessertes verteiltes objektorientiertes Gerätenetzwerksystem zu schaffen, mit dem Softwareanwendungen und Geräte unabhängig von den jeweils verwendeten Betriebssystemen und der Hardware unterstützt werden.

Die Aufgabe wird mit dem gattungsgemäßen verteilten objektorientierten Gerätenetzwerksystem erfindungsgemäß dadurch gelöst, dass die Steuerungsmittel eine Abstraktionsschicht bilden, um Kommunikationsplattformen der Softwareanwendungen und Geräte an eine systemunabhängige Kommunikationsplattform anzupassen. Die systemunabhängige Kommunikationsplattform ist hierbei unabhängig von den Softwareanwendungen, Geräten und dem Gerätenetzwerk und bildet somit eine neutrale Plattform, über die die Registrierung von Softwareanwendungen und Geräten sowie die Kommunikation zwischen Softwareanwendungen und Geräten erfolgt. Die Steuerungsmittel bilden eine sogenannte "Middleware-Architektur" die neben den herkömmlich verfügbaren anwendungsprogrammspezifischen Schnittstellen (API's) für das verteilte objektorientierte Gerätenetzwerksystem und die Geräte eine Abstraktionsschicht bilden, um die verschiedenen Kommunikationsplattformen auf eine plattformunabhängige Kommunikationsschicht für die eingesetzten Softwareanwendungen und Geräte zu abstrahieren.

Damit ist es möglich, unterschiedliche Softwareanwendungs- und Geräteklassen beispielsweise für Multimedia- und Telematikanwendungen im Kraftfahrzeug zu unterstützen und eine dynamische Installation von Geräten (plug and play) sowie eine Softwarekonfigurierbarkeit zu ermöglichen.

Die Steuerungsmittel liefert vor allem vorzugsweise eine Kommunikationsplattform für dynamische geladene plattformunabhängige und/oder plattformabhängige Softwareanwendungen. Dabei ist die Kommunikationsplattform unabhängig von der von der Softwareanwendung genutzten Hardware und dem Betriebssystem.

Damit wird von den Steuerungsmitteln erfindungsgemäß dynamisch geladene plattformunabhängige Software (Klasse 1) unterstützt, die auf Zentraleinheiten verschiedener Hardware und Betriebssystem-Kombinationen eingesetzt werden kann. Mit den Steuerungsmitteln wird eine Abstraktionsschicht bereitgestellt, die unabhängig von der zugrundeliegenden Kombination aus Hardware und Betriebssystem der Softwareanwendungen eine gleichbleibende systemunabhängige Kommunikationsplattform bietet.

Zudem werden dynamisch geladene plattformabhängige Softwareanwendungen (Klasse 2) unterstützt, die auf eine konkrete Kombination aus Hardware und Betriebssystem optimiert ist.

Es ist auch vorteilhaft, wenn die Steuerungsmittel eine Schnittstelle für dynamisch angeschlossene plattformunabhängige und/oder plattformabhängige Geräte bilden. Die Schnittstellen sind unabhängig von dem Gerät und dem Gerätenetzwerksteuersystem. Auf diese Weise werden dynamisch angeschlossene plattformabhängige Geräte (Klasse 3) unterstützt, die über ein eigenes Kommunikationsprotokoll angesteuert werden. Für die Ansteuerung solcher Geräte sind in den Steuerungsmitteln vorzugsweise gerätespezifische Gerätenetzwerktreiber realisiert.

Die Steuerungsmittel können auch eine Schnittstelle für dynamisch angeschlossene plattformunabhängige Geräte (Klasse 4) liefern, die von einer Vielzahl von Zentraleinheiten angesteuert werden können. Wiederum sind die Schnittstellen unabhängig von dem Gerät und der Gerätenetzwerksteuerung realisiert. Die Steuerungsmittel bilden eine Abstraktionsschicht, über die unabhängig von der Ausprägung des speziellen Gerätes und des Gerätenetzwerksystems einer auf die Gerätesteuerung spezialisierten Softwareanwendung immer die gleiche Schnittstelle angeboten wird.

Weiterhin ist es vorteilhaft, wenn die Steuerungsmittel Zugriffselemente für einen überwachten Zugriff der Softwareanwendungen auf in dem Gerätenetzwerk verfügbare Systemressourcen und/oder verfügbaren Dienste haben. Damit ist ein überwachter Zugriff auf Systemressourcen der Dienste (Klasse 1) beispielsweise durch Betriebssystem-Abstraktionsschichten (OS-Abstraction Layer) und ein überwachter Zugriff auf Dienste der Diensteklassen 1 und 4 durch Betriebssystems- bzw. Geräte-Abstraktionsschichten (0S-Abstraction Layer bzw. Device Abstraction Layer) realisierbar.

Die Steuerungsmittel (Middleware) können die oben genannten Funktionalitäten vollständig oder auch nur einen Teil davon unterstützten, so dass die Steuerungsmittel skalierbar sind.

Die Steuerungsmittel werden zudem vorzugsweise zum selbsttätigen Erkennen von neu an das Gerätenetzwerk angeschlossenen Geräten oder zum Erkennen des Entfernens von Geräten von dem Gerätenetzwerk eingesetzt. Hierzu werden Identifizierungsdaten der Geräte über gerätespezifische Gerätenetzwerktreiber durch die Steuerungsmittel in gerätenetzwerkunabhängige Geräteverwaltungsdaten transformiert, so dass wiederum eine Kommunikation auf einer systemunabhängigen Kommunikationsplattform erfolgt.

Die Steuerungsmittel können weiterhin zur Steuerung von Verbindungen zwischen Softwareanwendungen und Geräten eingesetzt werden. Wiederum erfolgt die Kommunikation der Softwareanwendungen mit den Geräten durch Transformation über die systemunabhängige Kommunikationsplattform und nicht wie herkömmlich direkt zwischen Softwareanwendung und Gerät. Die Softwareanwendungen müssen daher nicht über spezielle Kenntnis der Kommunikationsschnittstellen für die anzusteuernden Geräte verfügen.

Die Erfindung wird nachfolgend anhand der beigefügten Zeichnungen näher erläutert. Es zeigen:
- Figur 1 -: Blockdiagramm eines verteilten objektorientierten Gerätenetzwerksystems mit erfindungsgemäßen Steuerungsmitteln;
- Figur 2 -: Blockdiagramm von Softwareanwendungsklassen, Zentraleinheit und Geräteklassen sowie den erfindungsgemäßen Steuerungsmitteln.

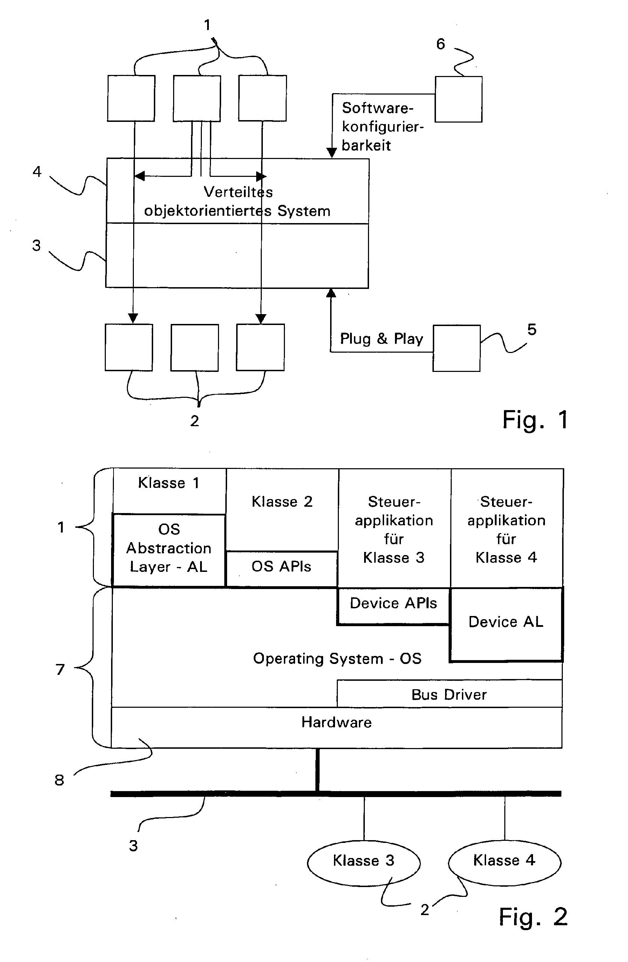

Die Figur 1 lässt ein verteiltes objektorientiertes System mit einer Vielzahl von Softwareanwendungen 1 und prozessorgesteuerten elektronischen Geräten 2 erkennen, die über ein Gerätenetzwerk 3 miteinander kommunizieren können. Auf das Gerätenetzwerk 3 sind die erfindungsgemäßen Steuerungsmittel 4 (Middleware) aufgesetzt, mit dem eine systemunabhängige Kommunikationsplattform geschaffen wird. Die Steuerungsmittel sind zudem vorgesehen, um neue Geräte 5 dynamisch in das Gerätenetzwerk 3 zu integrieren, ohne dass ein Abschalten des Gerätenetzwerksystems und eine aufwändige Durchführung einer lnstallationsroutine erforderlich ist. Die Installation der neuen Geräte 5 erfolgt nach dem Prinzip des _{"}plug and play".

Zudem sind die Steuerungsmittel 4 zur Konfiguration neuer Softwareanwendungen 6 an das Gerätenetzwerksystem ausgebildet.

Die Figur 2 lässt ein Blockdiagramm von Klassen von Softwareanwendungen 1, Klassen von Geräten 2, einem Gerätenetzwerk 3 als Bussystem und einer Zentraleinheit 7 mit einem Betriebssystem OS und Hardware 8 der Zentraleinheit 7 erkennen. Ein solches Gerätenetzwerksystem hat beispielsweise dynamisch geladene plattformunabhängige Softwareanwendungen 1 (Klasse 1), die auf Zentraleinheiten 7 verschiedener Kombinationen von Hardware 8 und Betriebssystemen OS eingesetzt werden können.

Mit den erfindungsgemäßen Steuerungsmitteln wird eine Betriebssystems-Abstraktionsschicht AL realisiert, die der plattformunabhängigen Softwareanwendung 1 unabhängig von dem Betriebssystem OS und der Hardware 8 der Zentraleinheit immer eine gleiche systemunabhängige Kommunikationsplattform liefert.

Ferner sind in dem Gerätenetzwerk Softwareanwendungen 1 vorgesehen, die dynamisch geladen werden und plattformabhängig sind (Klasse 2). Die Softwareanwendungen 1 der Klasse 2 sind somit auf konkrete Betriebssysteme 0 und Hardwaresysteme 8 optimiert.

Hierfür liefern die erfindungsgemäßen Steuerungsmittel anwendungsprogrammspezifische Schnittstellenmodule für Betriebssysteme (OS APl's), um solche Softwareanwendungen 1 zu unterstützen.

Weiterhin können als Klassen von Geräten 2 dynamisch angeschlossenen plattformabhängige Geräte 2 (Klasse 3) in dem Gerätenetzwerksystem angeschlossen sein, die über ein eigenes Kommunikationsprotokoll angesteuert werden. Derartige Geräte der Klasse 3 werden mit Steueranwendungen als Softwareanwendung (Steuerapplikation für Klasse 3) und mit Bustreibern angesteuert. Die erfindungsgemäßen Steuerungsmittel liefern anwendungsprogrammspezifische Schnittstellenmodule für Geräte (device APl's) mit denen systemunabhängige Schnittstellen als Kommunikationsplattform für die Geräte realisiert werden. Über die gerätespezifisch verfügbaren Bustreiber zur Geräteansteuerung erfolgt die Kommunikation mit den Softwareanwendungen 1 über diese systemunabhängige Kommunikationsplattform, so dass die Softwareanwendungen 1 keine Kenntnis über die konkrete Ausgestaltung der verwendeten Bussysteme und Geräte 2 haben müssen.

Weiterhin können dynamisch angeschlossene plattformunabhängige Geräte (Klasse 4) an das Gerätenetzwerk 3 angeschlossen sein, die von einer Vielzahl verschiedenartiger Zentraleinheiten 7 angesteuert werden können.

Hierzu bieten die erfindungsgemäßen Steuerungsmittel gerätespezifische Abstraktionsschichten (Device AL), um unabhängig von der Ausprägung des speziellen Gerätes 2 der Klasse 4 und des verwendeten Bussystems einer Steueranwendung eine systemunabhängige Kommunikationsplattform und damit immer die gleiche Schnittstelle anzubieten.

Weiterhin können die erfindungsgemäßen Steuerungsmittel auch den Zugriff auf Ressourcen der Zentraleinheit 7 und des darunterliegenden Gerätenetzwerksystems 3 überwachen. Dies kann für Softwareanwendungen 1 der Klasse 1 mit Hilfe der Betriebssystems-Abstraktionsschicht (OS Abstraction Layer AL) erfolgen.

Weiterhin können die erfindungsgemäßen Steuerungsmittel einen überwachten Zugriff auf Diensteressourcen des Gerätenetzwerksystems liefern. Dies kann als Diensteklasse 1 und 4 durch die Betriebssystems-Abstraktionsschicht (OS Abstraction Layer AL) oder die Geräte-Abstraktionsschicht (Device AL) erfolgen.

Die erfindungsgemäßen Steuerungsmittel (Middleware) können auch lediglich einen Teil der genannten Geräte und Diensteklassen unterstützen, wodurch eine Skalierbarkeit gegeben ist.

Da die Klassen 3 und 4 im System jeweils durch eine Steueranwendung der Klasse 1 oder 2 repräsentiert werden, sind durch die Steuerungsmittel insgesamt 6 Kombinationen zu realisieren.

Die Definition der sogenannten Middleware in dem Gerätenetzwerksystem hat den Vorteil, dass sich eine Produktentwicklung bei Verwendung verfügbarer Technologien und Standards, wie z. B. der Programmiersprache Java oder dem Home Audio/Video Interoperability Standard HAVI vereinfacht. Zudem ist eine dynamische Softwarekonfiguration und Softwareaufrüstung von Anwendungen auf Basis verschiedener Programmiersprachen, wie z. B. Java, C, C+ + etc. möglich. Es können auch elektronische Endgeräte mit Hilfe des HAVI-Standards dynamisch eingebunden werden. Zudem wird die Kommunikation zwischen verteilten Geräten 2 beispielsweise in einem Kraftfahrzeug unterstützt. Da die Middleware skalierbar ist, können verschiedene Produktvarianten realisiert werden.

Die erfindungsgemäßen Steuerungsmittel haben zudem den Vorteil, dass für den sicheren Anschluss bei einer Installation neuer Geräte an das Gerätenetzwerk dieses nicht heruntergefahren und neu gebootet werden muss. Zudem kann eine Verwaltung von Zugriffsrechten auf die verfügbaren Geräte 2 erfolgen. Zudem können einzelne Bandbreiten zugewiesen und garantiert werden, wenn mehrere Geräte 2 an einem gleichen Bussystem angeschlossen sind.

Das Erkennen angeschlossener Geräte 2 erfolgt durch Übermittlung von Identifikationsdaten von dem neu angeschlossenen oder entfernten Gerät 2 an die Steuerungsmittel. Die Identifikationsdaten können beispielsweise einen festgelegten Gerätetyp, wie z. B. Radio, CD-Spieler, Kamera etc., ausweisen, dessen Gerätetreiber bei den Steuerungsmitteln bereits vorhanden ist. Die Anmeldung des neuen Gerätes 2 bzw. dessen Abmeldung erfolgt unabhängig von der Art des Bussystems, wie z. B. M0ST, Firewire, USB, Bluetooth etc. durch Nutzung von Busverwaltungsmodulen in der Abstraktionsschicht der erfindungsgemäßen Steuerungsmittel.

Zur Ansteuerung von Geräten 2 in dem Gerätenetzwerk 3 wird von einer Softwareanwendung 1 bei den Steuerungsmittel das Vorhandensein eines bestimmten Gerätetyps erfragt und es wird ggf. ein Kontakt hergestellt. Dabei ist der Softwareanwendung 1 nicht bekannt, ob es sich bei dem angebotenen Gerät 2 um ein lokales Gerät 2 handelt und über welchen Bus das Gerät 2 angeschlossen ist. Sofern ein Gerät 2 bereits von einer anderen Softwareanwendung 1 verwendet wird, übernehmen die Steuerungsmittel die Regelung einer eventuellen Übernahme des Gerätes 2 durch die neue Softwareanwendung 1. Zudem bekommt die Softwareanwendung 1 das Gerät 2 und ggf. erforderliche Bandbreite auf dem Bussystem bzw. Gerätenetzwerk 3 zur Verfügung gestellt und reserviert.

Beispielsweise kann ein Gerätenetzwerk 3 mit einer Zentraleinheit 7 und einem Autoradio und einem CD-Spieler in einem Kraftfahrzeug realisiert werden, die an die Zentraleinheit 7 angeschlossen sind. Eine Softwareanwendung 1, die auf der Zentraleinheit 7 ausgeführt wird, greift hierbei nicht unmittelbar auf ein Gerät 2 zu, sondern sucht nach Gerätetypen, wie z. B. CD-Spieler und Verstärker. Die Gerätetypen werden dann verknüpft und das Abspielen gestartet. Die Steuerung erfolgt somit über eine systemunabhängige gerätetypenspezifische Kommunikationsplattform.

Beispielsweise kann auch an die Zentraleinheit ein Navigationsmodul und ein Funktelefon-Modem (GSM-Modem) über ein Gerätenetzwerk 3 nach dem Bluetooth-Standard angeschlossen werden. Eine Softwareanwendung 1 verknüpft dann das Navigationsmodul und das Funktelefonmodem zu einer dynamisch von aktuellen Staumeldungen abhängigen Routenführung.

Damit können Geräte 2 zweier verschiedener Hersteller busunabhängig miteinander verbunden werden. Eine Steueranwendung sucht lediglich nach einem Gerät 2 und bekommt eine Schnittstelle zurückgeliefert, die unabhängig davon ist, über welchen Bus oder sonstiges Gerätenetzwerk 3 das Gerät 2 angeschlossen ist, oder ob es lokal vorliegt.

Die Abstraktionsschicht der Steuerungsmittel stellt eine Überwachungsinstanz auf Systemressourcen dar. Hierbei werden Mehrfachzugriffe auf Geräte 2 abgefangen und Reservierungen auf Geräte 2 ggf. neu zugewiesen. Zudem wird die Bandbreite auf dem Bus- bzw. Gerätenetzwerk 3 kontrolliert verteilt.

Die Steuermittel greifen auf Beschreibungen von Gerätetypen, wie z. B. Radio, CD-Spieler zu, die lediglich Grundfunktionalitäten, wie z. B. Sender suchen, Sender einstellen, Verkehrsfunk aktivieren etc., beschreiben, damit möglichst viele verschiedene Geräte 2 und Gerätehersteller diesen Gerätetyp anbieten können. Diese Grundfunktionalitäten können durch beliebige Funktionen erweitert werden, die nur für den Hersteller des Gerätes 2 zugänglich sind.

Über dynamisch angeschlossene plattformabhängige Geräte 2 der Klasse 3 können gleichzeitig beliebige Geräte 2 in das Gerätenetzwerksystem eingebunden werden, die unter Umständen nicht mit allen unbestimmten Funktionalitäten ansteuerbar sind. Beispielsweise können auch Geräte 2 eingebunden werden, die keine Daten zur Identifizierung übermitteln. Auch wenn hierfür Gerätetreiber und Busstreiber auf herkömmliche Weise geladen werden müssen, unterliegen auch diese Geräte 2 ebenfalls der Steuerung des Gerätenetzwerks 3 und des Bussystems durch die Steuerungsmittel, d. h. dem Bandbreitenmanagement.

## Patentansprüche

1. Verteiltes objektorientiertes Gerätenetzwerksystem mit Softwareanwendungen (1), an das Gerätenetzwerk (3) angeschlossenen prozessorgesteuerten elektronischen Geräten (2), und mit Steuerungsmitteln für eine Vielzahl von Klassen von Softwareanwendungen (1) und Geräten (2), **dadurch gekennzeichnet, dass** die Steuerungsmittel eine Abstraktionsschicht zur Anpassung von Kommunikationsplattformen der Softwareanwendungen (1) und Geräte (2) an eine systemunabhängige Kommunikationsplattform bilden, die unabhängig von den Softwareanwendungen (1), Geräten (2) und dem Gerätenetzwerk (3) ist.

2. Verteiltes objektorientiertes Gerätenetzwerksystem nach Anspruch 1, **dadurch gekennzeichnet, dass** die Steuerungsmittel eine Kommunikationsplattform für dynamisch geladene plattformunabhängige und/oder plattformabhängige Softwareanwendungen (1) liefern, wobei die Kommunikationsplattform unabhängig von der von der Softwareanwendung (1) genutzten Hardware und Betriebssystem ist.

3. Verteiltes objektorientiertes Gerätenetzwerksystem nach Anspruch 1 oder 2, **dadurch gekennzeichnet, dass** die Steuerungsmittel eine Schnittstelle für dynamisch angeschlossene plattformunabhängige und/oder plattformabhängige Geräte (2) bilden, wobei die Schnittstellen unabhängig von dem Gerät (2) und dem Gerätenetzwerksteuerungssystem sind.

4. Verteiltes objektorientiertes Gerätenetzwerksystem nach Anspruch 3, **dadurch gekennzeichnet, dass** die Steuerungsmittel Gerätenetzwerktreiber zur Ansteuerung der Geräte (2) umfassen.

5. Verteiltes objektorientiertes Gerätenetzwerksystem nach einem der vorhergehenden Ansprüche, **dadurch gekennzeichnet, dass** die Steuerungsmittel Zugriffselemente für einen überwachten Zugriff der Softwareanwendungen (1) auf in dem Gerätenetzwerk (3) verfügbare Systemressourcen auf der Zentraleinheit (7) und dem darunterliegenden Gerätenetzwerk (3) haben.

6. Verteiltes objektorientiertes Gerätenetzwerksystem nach einem der vorhergehenden Ansprüche, **dadurch gekennzeichnet, dass** die Steuerungsmittel Zugriffselemente für einen überwachten Zugriff der Softwareanwendungen (1) auf in dem Gerätenetzwerk (3) verfügbare Dienste haben, welche durch weitere Softwareanwendungen (1) und/oder Geräte (2) bereitgestellt werden.

7. Verteiltes objektorientiertes Gerätenetzwerksystem nach einem der vorhergehenden Ansprüche, **dadurch gekennzeichnet, dass** die Steuerungsmittel zum selbsttätigen Erkennen von neu an das Gerätenetzwerk (3) angeschlossenen Geräten (2) oder von dem Gerätenetzwerk (3) entfernten Geräten (2) ausgebildet sind, wobei Identifizierungsdaten der Geräte (2) über gerätespezifische Gerätenetzwerktreiber durch die Steuerungsmittel in gerätenetzwerkunabhängige Geräteverwaltungsdaten transformiert werden.

8. Verteiltes objektorientiertes Gerätenetzwerksystem nach einem der vorhergehenden Ansprüche, **dadurch gekennzeichnet, dass** die Steuerungsmittel zur Steuerung von Verbindungen zwischen Softwareanwendungen (1) und Geräten (2) ausgebildet sind, wobei die Kommunikation der Softwareanwendungen (1) mit den Geräten (2) durch Transformation über diese systemunabhängige Kommunikationsplattform erfolgt.
